Europäisches Patentamt

European Patent Office

Office européen des brevets

(19)

(11) Numéro de publication: **0 289 392**
A1

## (12) DEMANDE DE BREVET EUROPEEN

(21) Numéro de dépôt: 88400944.0

(22) Date de dépôt: **19.04.88**

(51) Int. Cl.⁴: **G 02 B 15/16**
G 02 B 7/08

(30) Priorité: **29.04.87 FR 8706074**

(43) Date de publication de la demande:
**02.11.88 Bulletin 88/44**

(84) Etats contractants désignés: **CH DE GB IT LI**

(71) Demandeur: **Etablissements Pierre Angénieux SA
F-42570 Saint-Héand (FR)**

(72) Inventeur: **Corbasson, Gérard
28, Avenue Louis Thiollier
F-42570 Saint-Heand (FR)**

(74) Mandataire: **Tony-Durand, Serge
Cabinet Tony-Durand 77, rue Boissière
F-75116 Paris (FR)**

(54) **Dispositif d'objectif à focale variable et son procédé de commande.**

(57) Selon le présent procédé, les déplacements des deux groupes mobiles (II, III) formant variateur étant commandés par l'intermédiaire d'un calculateur, on impartit à ceux-ci, non seulement les déplacements nécessaires à chacun pour les variations progressives de focale, mais également un déplacement longitudinal complémentaire pour appliquer à l'objectif un coefficient multiplicateur de focale ayant une valeur choisie par l'opérateur. Quant au dispositif selon l'invention, il comprend un système de commande pourvu d'un calculateur et qui est apte à impartir aux deux groupes mobiles de lentilles (II, III) un déplacement longitudinal complémentaire pour appliquer à l'objectif un coefficient multiplicateur de focale, ce calculateur assurant également la variation voulue de l'iris et les déplacements complémentaires des groupes de focalisation pour chaque focale.

Ce procédé et ce dispositif permettant de choisir la focale la plus longue possible en fonction de l'ouverture numérique choisie ou du champ à couvrir.

Fig.1

EP 0 289 392 A1

# 0 289 392

**Description**

### "Dispositif d'objectif à focale variable et son procédé de commande"

La présente invention est relative aux objectifs à focale variable plus particulièrement destinés à être utilisés dans des studios de télévision.

Les dispositifs de ce genre comprennent plusieurs groupes de lentilles dont les déplacements permettent d'obtenir la variation de champ, en même temps qu'une image fixe sur le récepteur, quelle que soit la distance de mise au point choisie. En général la fonction de variation des focales est assurée par deux groupes mobiles de lentilles constituant ce que l'on appelle le "variateur", les autres groupes assurant, par leurs déplacements appropriés, la mise au point dans les meilleurs conditions possibles de qualité d'image, jusqu'aux distances les plus minimes, c'est-à-dire pratiquement contre l'élément frontal. Pour obtenir l'image fixe, les lois de déplacements des groupes mobiles sont calculées et réalisées en temps réel, en fonction de la focale et de la distance désirées.

Dans la plupart des objectifs utilisés dans les studios de télévision, il est en plus prévu un système permettant de réaliser une multiplication de la focale de base, ce système consistant en une tourelle rotative disposée derrière l'iris et qui porte plusieurs objectifs quasi-afocaux, dont chacun est ainsi susceptible d'être mis en service pour obtenir un coefficient multiplicateur différent.

Ceci permet d'obtenir un rapport de variation constant, et de choisir la focale de base en fonction des angles de champ utilisables. Cependant, le nombre d'ouverture maximum disponible étant proportionnel à la focale de base, il faut en tenir compte dans le choix du multiplicateur. En effet, en choisissant une situation favorisant les longues focales, il peut arriver que l'on soit trop diaphragmé. L'idéal, dans le cas où la quantité de lumière est critique et où l'on veut donc donner une priorité à l'ouverture, serait d'avoir un grand nombre de multiplicateurs, et de pouvoir choisir le compromis le meilleur. Mais ceci n'est pas possible avec les systèmes actuels constitués par une tourelle portant un nombre restreint d'objectifs quasi-afocaux correspondant à autant de coefficients multiplicateurs différents.

Une autre particularité des objectifs existants du type en cause est que le système multiplicateur ainsi prévu se trouve situé dans une région quasi-afocale, derrière l'iris. Or ceci a pour effet de changer de façon significative la position de la pupille de sortie, et donc la répartition des couleurs dans l'image (tache colorée), du fait des changements d'angle d'attaque des faisceaux principaux sur les miroirs dichroiques du séparateur de la caméra. Ce phénomène est aggravé quand la pupille de sortie est relativement proche de l'image, et aussi lorsqu'il y a du "ramping", c'est-à-dire lorsque l'ouverture numérique varie avec la focale. En effet dans ce cas, la pupille de sortie est l'image du diamètre d'un groupe quelconque de variateur, souvent l'élément frontal, dont les dimensions sont toujours limitées pour réduire le poids et le volume, et non plus l'image de l'iris. Par ailleurs, la transmission spectrale est modifiée par l'introduction de lentilles supplémentaires.

C'est pourquoi la présente invention a pour but de permettre l'application de coefficients multiplicateurs de la focale de base d'un objectif du type en cause sans que l'on rencontre les inconvénients du système exposé ci-dessus.

A cet effet l'invention a pour premier objet un procédé particulier de commande d'un tel objectif, qui est conçu de façon à permettre l'application d'une multitude de coefficients multiplicateurs de la focale de base sans avoir à faire appel à un système de tourelle du type rappelé précédemment. Ce procédé est conçu pour la commande d'un objectif à focale variable comportant au moins deux groupes mobiles de lentilles formant variateur et deux autres groupes au moins assurant par leur déplacement, la mise au point, et dont la position est définie en fonction des deux variables que sont la longueur focale et la distance de mise au point.

Ce procédé est caractérisé en ce que les déplacements des deux groupes mobiles formant variateur étant commandés par l'intermédiaire d'un calculateur, on impartit à ceux-ci, non seulement les déplacements nécessaires à chacun pour les variations de focale, mais également un déplacement longitudinal complémentaire pour appliquer à l'objectif un coefficient multiplicateur de focale ayant une valeur choisie par l'opérateur, le calculateur assurant alors également la variation voulue de l'iris et les déplacements complémentaires des groupes de focalisation pour chaque focale.

Ainsi, la fonction de multiplicateur est réalisée par des déplacements complémentaires des groupes mobiles qui servent par ailleurs de variateur. Comme il sera exposé par la suite, ceci présente des avantages importants par rapport au système utilisée antérieurement.

Cependant la présente invention a égaglement pour objet un dispositif d'objectif conçu pour la mise en oeuvre du procédé défini ci-dessus. Ce dispositif est caractérisé en ce que :

- d'une part les deux groupes mobiles de lentilles formant variateur ont des caractéristiques telles qu'en plus de pouvoir assurer les variations de focale de l'objectif, ils puissent, sous l'effet d'un déplacement longitudinal complémentaire, réaliser une multiplication de la focale de base, et l'agencement est tel que dans leurs positions extrêmes, ces deux groupes puissent encore faire l'objet d'un tel déplacement complémentaire,

- d'autre part, en combinaison avec cet objectif, le présent dispositif comprend, pour assurer les déplacements des groupes mobiles de lentilles, un système de commande pourvu d'un calculateur et qui est apte à impartir à ces deux groupes mobiles de lentilles, non seulement les déplacements nécessaires à chacun pour la variation progressive de focale, mais également un déplacement longitudinal complémentaire pour appliquer à l'objectif un coefficient multiplicateur de focale ayant une valeur choisie par l'opérateur, ce

2

calculateur assurant également la variation voulue de l'iris et les déplacements complémentaires des groups de focalisation pour chaque focale.

Cependant d'autres particularités et avantages de l'objet de l'invention apparaitront au cours de la description suivant. Celle-ci est donné en référence au dessins annexé, et sur lequel :

La figure 1 est une vue en coupe longitudinale d'un objectif selon l'invention dans sa situation normale et dont les groupes de lentilles sont représentés dans une position de courte focale.

La figure 2 est une vue similaire représentant les groupes de lentilles de cet objectif dans une position de longue focale, cet objectif étant toujours dans sa situation normale.

La figure 3 est une vue similaire représentant ce même objectif dans une situation de multiplication de sa focale de base selon le coefficient de 1,4, les groupes de lentilles étant représentés dans une position de courte focale.

La figure 4 est une vue illustrant cet objectif dans la même situation, mais alors que les groupes de lentilles sont dans une position de longue focale.

La figure 5 est une vue similaire représentant l'objectif dans une situation différente, en l'occurrence une multiplication de la focale de base correspondant au coefficient 2, les groupes de lentilles étant représentés dans une position de courte focale.

La figure 6 est une vue similaire représentant l'objectif dans la même situation, mais alors que ces groupes de lentilles sont dans une position de longue focale.

La figure 7 est un tableau indiquant les différentes ouvertures possibles en fonction de la focale de l'objectif.

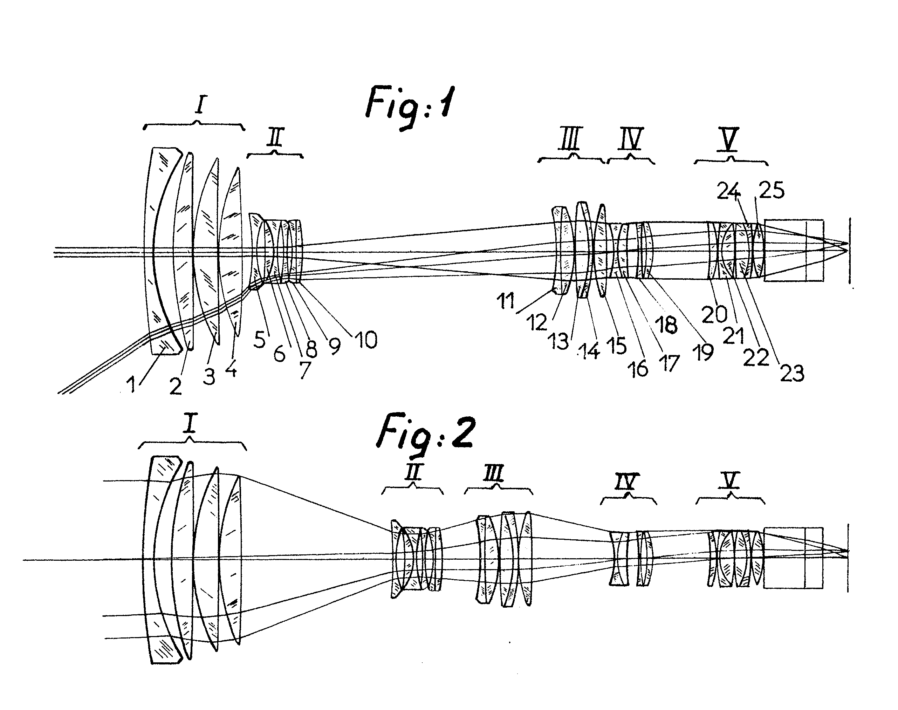

L'objectif représenté aux figures 1 à 6 comporte cinq groupes de lentilles I, II, III, IV, V. Parmi ceux-ci les deux groupes II et III sont mobiles et ont pour fonction de constituer l'élément variateur de la focale de l'objectif et ce, en fonction d'une loi optique déterminée. Les deux groupes I et V sont également mobiles, mais ils ne participent pas à la variation de la focale de l'objectif. En effet leur fonction est d'assurer, par leurs déplacements, la mise au point, leur position étant définie en fonction des deux variables que sont la longueur focale et la distance de mise au point.

Le groupe I est convergent de même que les groupes III et V. Quant aux groupes II et IV, ils sont divergents.

En allant de l'avant vers l'arrière, le groupe I comprend une première lentille divergente 1 et trois autres lentilles convergentes 2, 3 et 4. Le groupe II comprend une lentille divergente 5, un doublet divergent 6-7, une lentille divergente 8 et un doublet divergent 9-10.

Pour sa part, le groupe III comprend, toujours de l'avant vers l'arrière, un premier doublet converget 11-12, un second doublet convergent 13-14 et une lentille convergente 15.

Le groupe IV comprend un doublet convergent 16-17, une lentille divergente 18 et une ménisque convergent 19.

Enfin, le groupe V comprend un ménisque convergent 20, un premier doublet convergent 21-22, un second doublet convergent 23-24 et une lentille convergente 25.

L'objectif ainsi constitué est un objectif à focale variable ayant une focale de base de 8,5 et un coefficient de variation de vingt fois cette longueur focale. Son ouverture maximum est alors de F/1.3.

Les quatre groupes I, II, III et IV et les diverses lentilles de ces groupes répondent aux inégalités suivantes dans lesquelles :

-F'1, F'2, F'3 et F'4 correspondent chacun à la focale d'un groupe en allant de l'avant vers l'arrière,

- f'2, f'2....... f'5 correspondent chacun à la focale d'une lentille en allant de l'avant vers l'arrière,

- R1, R2......... correspondent au rayon de chaque surface de courbure en allant de l'avant vers l'arrière,

a) Relations générales $\quad [2(F'2) <; (F'3) <; 3(F'2)]$
$[2(F'3) <; (F'1) <; 3(F'3)]$

b) Relations dans le Groupe I $\quad 1/2\ F'1 <; R2 <; \frac{3}{2}\ F'1$
$1/2\ F'1 <; R5 <; \frac{3}{2}\ F'1$
$1/2\ F'1 <; R7 <; 2(F'1)$
$(F'1)\ (f'4) <; 3(F'1)$

c) Relations dans le groupe II $\quad (F'2) <; R10 <; 3(F'2)$
$(F'2) <; (f'5) <; [3(F'2)]$
$(F'2) <; (f'6) <; [3(F'2)]$
$(F'2) <; (f'6) <; [3(F'2)]$
$1,65 <; n9 <; 1,85$

d) Relations dans le groupe III $\quad (F'3) <; (R21) <; 2\ (F'3)$
$(F'3) <; (R25) <; 2\ (F'3)$
$(F'3) <; (f'12) <; 3\ (F'3)$

(F'3) < ; (f'13) < ;3 (F'3)
(F'3) < ; (f'15) < ;3 (F'3)

Quant aux valeurs numériques des rayons des différentes lentilles ainsi que des espaces d'air intermédiaire existant dans chaque groupe, elles sont indiqués sur le tableau ci-après. Sur celui-ci, les rayons des courbures sont désignés par les indications R1, R2, R3... en suivant l'ordre des différentes surfaces de lentilles depuis l'extrémité avant jusqu'à l'arrière. Quant aux espaces d'air, ils sont désignés par les indications E1, E2, E3..., en numérotant ceux-ci suivant leur position en allant de l'avant vers l'arrière.

## TABLEAU

OBJECTIF ZOOM   20 X 8.5

OUVERTURE   =   F/1.3

| | | | | | |
|---|---|---|---|---|---|
| R 1 = | 574.233 | E 1 = | 7.000 | 785259 |
| R 2 = | 147.083 | E 2 = | 16.000 | AIR |
| R 3 = | 271.402 | E 3 = | 17.000 | 516642 |
| R 4 = | -17101.590 | E 4 = | .200 | AIR |
| R 5 = | 169.226 | E 5 = | 20.000 | 516642 |
| R 6 = | -55807.890 | E 6 = | .200 | AIR |
| R 7 = | 171.489 | E 7 = | 19.000 | 603655 |
| R 8 = | -1365.530 | E 8 = | 8.279 | AIR |
| R 9 = | -333.416 | E 9 = | 2.400 | 883408 |
| R10 = | 63.099 | E10 = | 7.300 | AIR |
| R11 = | -400.732 | E11 = | 7.500 | 785257 |
| R12 = | -46.469 | E12 = | 2.000 | 620603 |
| R13 = | 93.146 | E13 = | 5.500 | AIR |
| R14 = | -185.314 | E14 = | 2.400 | 620603 |
| R15 = | 225.379 | E15 = | 5.600 | AIR |
| R16 = | -70.541 | E16 = | 2.000 | 620603 |
| R17 = | -2632.278 | E17 = | 5.500 | 785257 |
| R18 = | -134.123 | E18 = | 203.890 | AIR |
| R19 = | -213.828 | E19 = | 2.800 | 728284 |
| R20 = | 456.882 | E20 = | 11.800 | 620603 |
| R21 = | -90.853 | E21 = | .200 | AIR |
| R22 = | 465.654 | E22 = | 11.800 | 620603 |
| R23 = | -101.472 | E23 = | 2.800 | 728284 |
| R24 = | -172.477 | E24 = | .200 | AIR |
| R25 = | 111.958 | E25 = | 11.200 | 516642 |
| R26 = | -454.108 | E26 = | 5.750 | AIR |
| R27 = | -58.702 | E27 = | 1.800 | 652587 |
| R28 = | 44.822 | E28 = | 8.000 | 755275 |
| R29 = | 183.422 | E29 = | 10.000 | AIR |
| R30 = | -168.681 | E30 = | 2.000 | 652587 |

| | | | | | |
|---|---|---|---|---|---|
| R31 = | 341.707 | E31 = | 4.300 | AIR | |
| R32 = | -93.665 | E32 = | 6.000 | 806409 | |
| R33 = | -52.237 | E33 = | 45.000 | AIR | |
| R34 = | -253.235 | E34 = | 5.700 | 497816 | |
| R35 = | -74.636 | E35 = | .200 | AIR | |
| R36 = | 129.994 | E36 = | 1.800 | 772497 | |
| R37 = | 30.625 | E37 = | 12.400 | 497816 | |
| R38 = | -177.671 | E38 = | .200 | AIR | |
| R39 = | 326.308 | E39 = | 11.300 | 497.816 | |
| R40 = | -45.166 | E40 = | 1.800 | 806409 | |
| R41 = | -506.625 | E41 = | .200 | AIR | |
| R42 = | 56.736 | E42 = | 9.300 | 497816 | |
| R43 = | -61.245 | E43 = | 1.000 | AIR | |
| R44 = | 999999999.000 | E44 = | 33.000 | 603380 | |
| R45 = | 999999999.000 | E45 = | 14.500 | 517642 | |
| R46 = | 999999999.000 | E46 = | .000 | AIR | |

Comme il a déjà été indiqué, les figures 1 et 2 représentent le présent objectif dans sa situation normale, c'est-à-dire dans le cas d'une focale de base de 8,5. Sur la figure 1, les groupes mobiles II et III sont représentés dans leur position correspondant à une courte focale. Par contre sur la figure 2, ces deux même groupes sont représentés dans leur position de courte focale.

Dans cette dernière position, les groupes II et III ne sont pas rapprochés étroitement l'un de l'autre, mais il existe un intervalle relativement important permettant un rapprochement plus étroit dans d'autres cas lors d'une multiplication de la focale de base. Ceci est rendu possible par une détermination appropriée des caractéristiques des différents éléments de l'objectif, et notamment une réduction judicieuse de l'encombrement des groupes II et III. La réduction de cet encombrement est obtenue par l'emploi de verres de hauts indices dans certaines lentilles des éléments II et III, ce qui a pour effet d'en réduire les courbures, et donc le volume.

La caractéristique essentielle du présent objectif réside dans le fait que les deux groupes II et III ont des configurations et caractéristiques telles qu'ils puissent jouer deux fonctions distinctes, à savoir :

- d'une part leur fonction normale de variateur progressif de focale de l'objectif,

- d'autre part une fonction de multiplicateur de la focale de base suivant un très grand nombre de coefficients possibles de multiplication.

Par ailleurs, les différents groupes mobiles du présent objectif sont assujettis à un dispositif de commande comportant un calculateur et qui est apte à impartir, aux deux groupes mobiles II et III, non seulement les déplacements nécessaires pour une variation progressive de focale, mais également un déplacement longitudinal complémentaire pour appliquer à l'objectif un coefficient multiplicateur de focale ayant une valeur choisie par l'opérateur. Il suffit alors à celui-ci d'agir sur un bouton de ce dispositif de commande pour obtenir une multiplication de la focale de base selon un coefficient déterminé. Ceci provoque alors les déplacements complémentaires voulus des deux groupes II et III pour réaliser la multiplication correspondante de focale. Cependant dans un tel cas le calculateur détermine également la variation voulue de l'iris et les déplacements complémentaires des groupes de focalisation pour chaque focale.

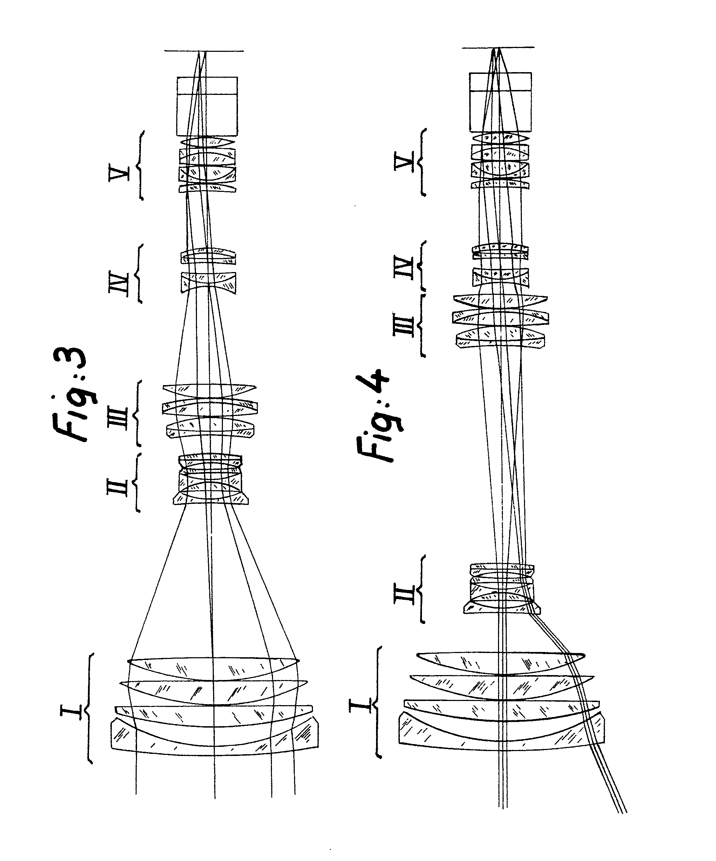

Ainsi les figures 3 et 4 représentent les groupes mobiles II et III du présent objectif, respectivement dans leur position de courte focale et dans leur position de longue focale et ce, alors qu'un coefficient multiplicateur g de 1,4x a été appliqué à l'objectif grâce à un déplacement complémentaire approprié des deux groupes II et III. La focale de base est donc désormais de 1,9 et l'objectif est ainsi un objectif à focale variable de 20 X 11,9.

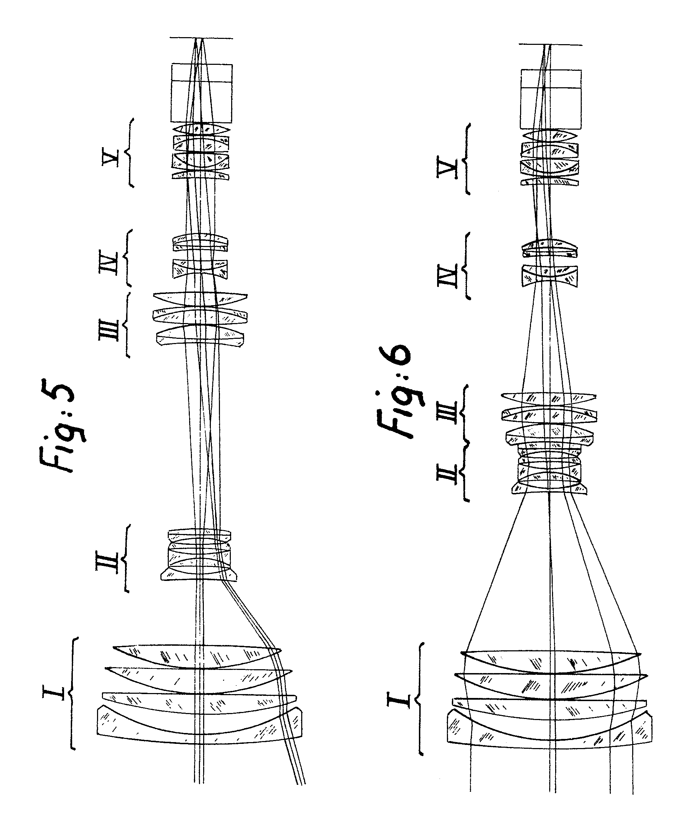

Quant aux figures 5 et 6, elles représentent les groupes mobiles II et III du présent objectif, respectivement dans leur position de courte focale et dans celle de longue focale, alors qu'un coefficient multiplicateur g de 2xa été appliqué à celui-ci. En conséquence la focale de base de cet objectif est désormais de 17, de sorte qu'il constitue un objectif à focale variable de 20 X 17. Il convient de noter que dans ce cas il existe dans la position de longue focale un écartement relativement important à la fois entre les groupes I et II d'une part et entre les groupes III et IV d'autre part. Ceci est nécessaire pour permettre un rapprochement étroit dans la position de courte focale dans le cas de la situation normale de l'objectif (voir figure 1). Les caractéristiques des différents groupes et de leur lentille sont donc déterminées en conséquence.

Mais les deux cas illustrés respectivement sur les figures 3 et 4 et les figures 5 et 6 ne constituent que des exemples indicatifs. En effet il est possible d'appliquer à l'objectif un grand nombre de coefficients multiplicateurs de valeurs différentes, sous réserve que le dispositif de commande soit déterminé en conséquence et que le calculateur comporte un programme lui-même établi à cet effet.

La particularité essentielle du dispositif selon l'invention est donc que la fonction multiplicateur, qui était jusqu'ici réalisée par une tourelle d'objectifs quasi-afocaux située dans la partie fixe arrière de l'objectif, et généralement limitée à une ou deux positions, est ici remplacée par un déplacement longitudinal complémentaire des éléments du variateur.

Ainsi il devient possible de choisir très précisément la focale la plus longue souhaitée, en fonction de l'ouverture numérique choisie ou du champ à couvrir. A partir de ce moment, la variation de focale s'effectue toujours dans le même rapport maximum avec une ouverture constante. On peut ainsi donner véritablement la priorité du choix à l'ouverture et affiner le compromis.

En effet, cette situation nouvelle revient à avoir un nombre illimité de multiplicateurs, entre les deux valeurs extrêmes. La gestion de ces positions, de l'iris dont l'ouverture s'adapte à chaque situation, et des déplacements complémentaires des groupes de focalisation adaptés à chaque focale, est alors réalisée par le calculateur prévu dans le dispositif de commande.

Grâce à la conception du présent dispositif, il est possible à un opérateur d'assujettir exactement la longueur focale au niveau de lumière choisi. Il peut alors placer l'objectif dans le cas qui correspond le mieux au champ utile, l'ouverture étant déterminée par l'ouverture maximum admissible à la plus longue focale choisie de variation.

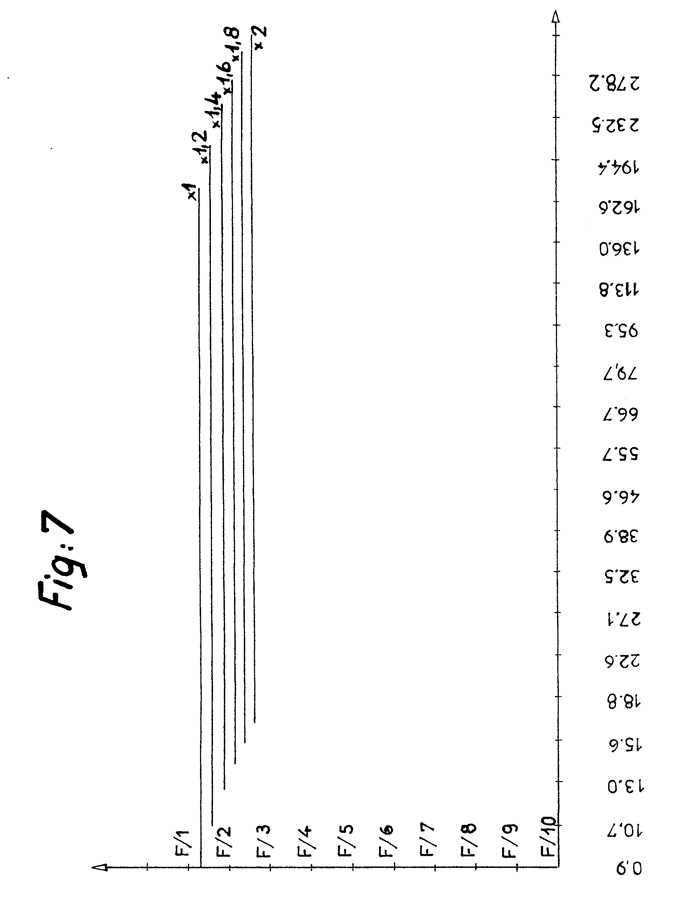

Du reste le tableau de la figure 7 indique les variations de valeurs de l'ouverture de l'objectif en fonction des différentes focales. Il convient donc que l'opératuer se reporte à ce tableau pour adopter le coefficient éventuel de multiplication de la focale de base qui est le plus approprié à son cas d'utilisation. On peut ainsi centrer avec précision la variation de focale en fonction des angles de champ extrêmes choisis.

En plus de cet avantage essentiel d'utilisation, le présent dispositif comporte un certain nombre d'autres avantages.

L'un de ceux-ci réside dans le fait que la pupille de sortie n'est pas affectée par l'application d'un coefficient multiplicateur de la focale de base et qu'aucune tache colorée ne vient perturber l'image. Ceci est dû à ce que dans le cas présent aucun élément optique n'est ajouté derrière l'iris et que le rapport de focale est choisi pour qu'il n'y ait pas de "ramping", c'est-à-dire la variation de l'ouverture numérique avec la focale. La transmission spectrale de la lumière est donc inchangée.

Un autre avantage encore porte sur le fait que le présent objectif comprend un nombre de lentilles plus réduit que dans les objectifs actuellement employés pour l'utilisation en cause. Ceci entraîne une réduction de l'absorption de lumière lors de l'application d'un multiplicateur de focale, par le fait que, dans le cas présent, le nombre de surfaces traversées reste alors le même. Ceci entraîne également une réduction du prix de revient. Un autre avantage encore réside dans la réduction du poids de l'ensemble du fait de la suppression de la tourelle d'objectifs afocaux qui est prévue dans les objectifs actuels du type rappelé précédemment.

**Revendications**

1. Procédé de commande d'un objectif à focale variable comportant au moins deux groupes de lentilles (II, III) mobiles suivant l'axe optique, asurant les variations de focales commandées par l'opérateur, l'image finale restant fixe pendant ces variations, et comportant également deux autres groupes au moins (I, V) assurant, par leur déplacement, la mise au point, et dont la position est définie en fonction des deux variables que sont la longueur focale et la distance de mise au point,

caractérisé en ce que les déplacements des deux groupes mobiles (II, III) formant variateur étant commandés par l'intrmédiaire d'un calculateur, on impartit à ceux-ci, non seulement les déplacements nécessaires à chacun pour les variations progressives de focale, mais également un déplacement longitudinal complémentaire pour appliquer à l'objectif un coefficient multiplicateur de focale ayant une valeur choisie par l'opérateur, le calculateur assurant alors également la variation voulue de l'iris et les déplacements complémentaires des groupes de focalisation pour chaque focale.

2 - Dispositif d'objectif conçu pour la mise en oeuvre du procédé de commande selon la revendication 1 sur un objectif à focale variable comportant au moins deux groupes de lentilles (II, III) mobiles suivant l'axe optique, assurant les variations de focales commandées par l'opérateur, l'image finale restant fixe pendant ces variations, et comportant également deux autres groupes au moins (I, V), assurant, par leur déplacement, la mise au point, et dont la position est définie en fonction des deux variables que sont la longueur focale et la distance de mise au point,

caractérisé en ce que

- d'une part les deux groupes mobiles (II, III) de lentilles formant variateur ont des caractéristiques telles qu'en plus de pouvoir assurer les variations de focale de l'objectif, ils puissent, sous l'effet d'un déplacement longitudinal complémentaire, réaliser une multiplication de la focale de base, et l'agencement est tel que dans leurs positions extrêmes, ces deux groupes puissent encore faire l'objet d'un tel déplacement complémentaire,

- d'autre part, en combinaison avec cet objectif, le présent dispositif comprend, pour assurer les déplacements des groupes mobiles de lentilles (II, III), un système de commande pourvu d'un calculateur et qui est apte à impartir à ces deux groupes mobiles de lentilles, non seulement les déplacements nécessaires à chacun pour les variations de focale, mais également un déplacement longitudinal complémentaire pour appliquer à l'objectif un coefficient multiplicateur de focale ayant une valeur choisie par l'opérateur, ce calculateur assurant également la variation voulue de l'iris et les déplacements complémentaires des groupes de focalisation pour chaque focale.

3 - Dispositif d'objectif selon la revendication 1, caractérisé en ce que les quatre groupes de lentilles et les diverses lentilles de ces groupes répondent aux inégalités suivantes dans lesquelles :

- $F'1$, $F'2$, $F'3$ et $F'4$ correspondent chacun à la focale d'un groupe en allant de l'avant vers l'arrière,

- $f'1$, $f'2$...... $f'25$ correspondant chacun à la focale d'une lentille en allant de l'avant vers l'arrière,

- $R1$, $R2$......... correspondent au rayon de chaque surface de courbure en allant de l'avant vers l'arrière,

a) Relations générales

$$[2(F'2) <; (F'3) <; 3(F'2)]$$
$$[2(F'3) <; (F'1) <; 3(F'3)]$$

b) Relations dans le Groupe I

$$1/2\, F'1 <; R2 <; \tfrac{3}{2}\, F'1$$
$$1/2\, F'1 <; R5 <; \tfrac{3}{2}\, F'1$$
$$1/2\, F'1 <; R7 <; 2(F'1)$$
$$(F'1)\,(f'4) <; 2(F'1)$$

c) Relations dans le groupe II

$$(F'2) <; R10 <; 3(F'2)$$
$$(F'2) <; (f'5) <; [3(F'2)]$$
$$(F'2) <; (f'6) <; [3(F'2)]$$
$$(F'2) <; (f'6) <; [3(F'2)]$$
$$1,65 <; n9 <; 1,85$$

d) Relations dans le groupe III

$$(F'3) <; (R21) <; 2\,(F'3)$$
$$(F'3) <; (R25) <; 2\,(F'3)$$
$$(F'3) <; (f'12) <; 3\,(F'3)$$
$$(F'3) <; (f'13) <; 3\,(F'3)$$
$$(F'3) <; (f'15) <; 3\,(F'3)$$

0289392

Fig:1

Fig:2

Fig:3

Fig:4

0289392

Fig:5

Fig:6

0289392

Fig. 7

0289392

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | SMPTE JOURNAL, vol. 91, no. 9, septembre 1982, pages 808-815, Seardale, New York, US; K. MACHER: "Television zoom lens with three integrated zoom ranges" * En entier * --- | 1,2 | G 02 B 15/16 G 02 B 7/08 |
| A | GB-A-2 141 260 (BARR & STROUD LTD) * Page 2, lignes 6-30; figure 1 * --- | 1,2 | |
| A | PATENT ABSTRACTS OF JAPAN, vol. 5, no. 201 (P-94)[873], 19 décembre 1981, page 35 P 94; & JP-A-56 121 007 (HITACHI DENSHI K.K.) 22-09-1981 ----- | 1 | |

| DOMAINES TECHNIQUES RECHERCHES (Int. Cl.4) |
|---|
| G 02 B 7/00 G 02 B 15/00 |

Le présent rapport a été établi pour toutes les revendications

| Lieu de la recherche | Date d'achèvement de la recherche | Examinateur |
|---|---|---|
| LA HAYE | 20-07-1988 | SARNEEL A.P.T. |